(19) **Europäisches Patentamt / European Patent Office / Office européen des brevets**

(11) **EP 2 793 100 B1**

(12) **FASCICULE DE BREVET EUROPEEN**

(45) Date de publication et mention
de la délivrance du brevet:
**12.07.2017 Bulletin 2017/28**

(51) Int Cl.:
*G06F 1/32* (2006.01)     *G06F 3/0346* (2013.01)

(21) Numéro de dépôt: **14156179.5**

(22) Date de dépôt: **21.02.2014**

(54) **Périphérique autonome de pointage**

Autonomes Zeigegerät

Standalone pointing peripheral

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.04.2013 FR 1353581**

(43) Date de publication de la demande:
**22.10.2014 Bulletin 2014/43**

(73) Titulaire: **Freebox SAS
75016 Paris (FR)**

(72) Inventeur: **Pouillon, Nicolas
75013 Paris (FR)**

(74) Mandataire: **Dupuis-Latour, Dominique
Bardehle Pagenberg
10, boulevard Haussmann
75009 Paris (FR)**

(56) Documents cités:
**US-A1- 2010 218 024     US-B1- 6 452 494**

**Description**

L'invention concerne un périphérique autonome de pointage, se présentant sous forme d'un boitier tenu à la main.

Un tel périphérique peut notamment être utilisé pour piloter un équipement de type *set-top box* (boitier décodeur) relié à un fournisseur d'accès Internet par une liaison filaire ADSL ou en fibre optique de type FTTH, en association avec un téléviseur permettant d'afficher diverses informations.

Un exemple d'un tel boitier est l'équipement distribué par l'opérateur *Free,* Paris, France sous la dénomination *Freebox V6 ou Freebox Révolution.* Il s'agit d'un ensemble de boitiers d'interfaçage multifonctions comportant un modem ADSL/FTTH et mettant en oeuvre des fonctions de téléphonie, réseau IP (par réseau filaire Ethernet ou sans fil Wi-Fi), mobile (par exemple par une technologie de type *femtocell*) et télévision interactive.

Ces différentes fonctions peuvent être également intégrées à un équipement unique de type "téléviseur connecté" (ou encore "téléviseur Internet") qui dispose de sa propre interface IP permettant de le connecter directement au réseau IP de l'abonné, sans interposition de boitier décodeur séparé.

Pour ces équipements, le périphérique se présente sous forme d'une télécommande dont le boitier non seulement porte divers boutons (comme toute télécommande conventionnelle), mais inclut également des "capteurs sensoriels", tels que gyromètres et accéléromètres, permettant de détecter et analyser les mouvements communiqués au boitier par l'utilisateur. Ainsi, en déplaçant le boitier vers le bas/vers le haut ou vers la droite/vers la gauche, l'utilisateur peut par exemple déplacer une zone de sélection ou *sprite* (élément graphique mobile, en général partiellement transparent) superposé à l'image affichée sur l'écran du téléviseur, de la même manière qu'il déplacerait un pointeur sur un écran d'ordinateur au moyen d'une souris ou d'un pavé tactile. Si l'image affichée est par exemple une page de navigateur Internet, l'utilisateur pourra de cette manière déplacer le *sprite* sur une zone de la page ou un lien affiché à l'écran, qu'il sélectionnera ensuite en "cliquant" par appui sur un bouton de la télécommande.

Cet usage n'est cependant pas limitatif de l'invention, qui peut s'appliquer à de très nombreuses autres situations mettant en oeuvre un périphérique de pointage, par exemple en matière de jeux video où le périphérique de pointage est utilisé pour déplacer un personnage, commander une action du jeu, etc., via des rotations ou autres déplacements de ce périphérique de pointage.

De façon générale, avec ce type de périphérique on cherche généralement à ce que l'utilisateur retrouve l'ergonomie d'un dispositif de pointage lumineux de type pointeur laser ou analogue, où la tache lumineuse (ici matérialisée par la zone de sélection ou le *sprite* sur l'écran) est dans l'alignement de l'axe principal du pointeur et/ou suit les mouvements appliqués par l'utilisateur.

À la différence des télécommandes conventionnelles mettant le plus souvent en oeuvre un émetteur infrarouge, dans le cas des télécommandes à capteurs sensoriels la transmission des informations du périphérique à l'équipement distant se fait par une liaison sans fil qui est généralement une liaison radio, le plus souvent bidirectionnelle pour que l'équipement puisse adresser au périphérique des signaux d'acquittement confirmant la bonne réception des ordres et des signaux représentatifs de l'orientation du boitier, émis par le périphérique. En effet, à la différence d'une liaison infrarouge fonctionnant dans un environnement cloisonné optiquement par des murs, une liaison radio peut subir diverses interférences non maitrisables ou aléas de transmission qui nécessiteront la répétition du signal émis. Pour cette raison, l'envoi en retour par le périphérique d'une information d'acquittement permet de garantir la qualité et la continuité de la liaison radio, conditions importantes car lorsque le boitier du périphérique est en mouvement, il est nécessaire de transmettre de façon répétée les informations de position dérivées des signaux gyrométriques et accélérométriques afin d'assurer un suivi continu, par l'équipement distant, de l'orientation dans l'espace du périphérique de pointage.

Les périphériques de ce type, lorsqu'ils se présentent sous forme d'un boitier autonome (sans fil de liaison à l'équipement), doivent être alimentés sur batterie, par des piles rechargeables ou non.

Pour des télécommandes à simple clavier, l'autonomie n'est généralement pas un problème, car la télécommande et ses circuits ne sont alimentés que pendant la durée, très brève, de l'appui sur une touche.

En revanche, pour une télécommande à capteurs sensoriels, la problématique de la consommation énergétique revêt une acuité particulière. Il est en effet nécessaire de pouvoir suivre de façon continue les déplacements du boitier, ce qui implique d'alimenter pendant toute cette période de suivi les circuits gyrométriques et accélérométriques, ainsi que les circuits radio pour envoyer à l'équipement distant des informations de mise à jour de l'orientation du boitier dès qu'un changement significatif de position est détecté, ou bien indiquant que le boitier est immobile (et que le pointeur sur l'écran du téléviseur doit donc être maintenu à sa position).

Il n'est toutefois pas souhaitable de laisser ces circuits alimentés en permanence, car la batterie viendrait à s'épuiser très rapidement.

Il n'est pas souhaitable non plus de demander à l'utilisateur d'allumer/ éteindre explicitement les circuits, l'ergonomie de la télécommande en pâtissant de trop.

Une solution simple consiste à désalimenter tous les circuits du périphérique de pointage après écoulement d'une durée prédéterminée pendant laquelle aucun mouvement n'a été détecté par les capteurs sensoriels, révélant une immobilisation prolongée du périphérique par exemple après que celui-ci a été posé sur une table.

Ainsi, le US2010/0218024 A1 propose de désalimenter après une temporisation prédéterminée le circuit gyrométrique et/ou le circuit accélérométrique d'un dispositif de pointage pour en réduire la consommation. Ce document souligne à cet égard que c'est surtout en arrêtant le circuit gyrométrique, fortement consommateur, que l'on pourra réduire substantiellement la consommation du dispositif. Le microprocesseur est ensuite désactivé, après avoir mis en mémoire les données courantes des capteurs.

Le dispositif pourra être ultérieurement réactivé par un appui sur l'un de ses boutons.

Il est toutefois difficile d'optimiser la temporisation de désactivation du dispositif : si celle-ci est longue (par exemple plusieurs dizaines de secondes sans aucun mouvement détecté), l'avantage procuré en termes d'économie d'énergie est relativement limité ; si inversement elle est courte (par exemple quelques secondes seulement), la durée de vie de la batterie sera beaucoup mieux préservée, mais la désactivation des circuits risque d'intervenir de façon intempestive : ainsi, par exemple dans un cas de figure où l'utilisateur fixe une zone de l'image en se préparant à cliquer dessus, les déplacements du périphérique seront quasi-nuls, de sorte que si celui-ci est rapidement désactivé l'utilisateur éprouvera une sensation désagréable et déstabilisante de non-réactivité ou de latence de fonctionnement au moment de l'appui sur le bouton.

En effet, la réactivation des divers circuits implique un temps de mise en route parfois non négligeable, tout particulièrement pour les capteurs gyrométriques dont la latence est de l'ordre de 1/5 de seconde du fait du temps de charge des condensateurs internes, les résultats délivrés par les capteurs pendant cette période de mise en route n'étant pas significatifs.

Or une telle durée d'activation est très longue par rapport à la latence acceptable par l'utilisateur, ce qui aura donc un effet très négatif sur l'ergonomie générale du périphérique.

L'un des buts de l'invention est de remédier aux inconvénients précités, en proposant un périphérique de pointage à capteurs sensoriels doté de moyens efficaces pour ménager la capacité énergétique de la batterie, qui puisse préserver l'aptitude du périphérique à déterminer rapidement (c'est-à-dire avec un faible temps de latence pour l'utilisateur) qu'il est ou n'est plus en cours d'utilisation afin, dans ce dernier cas, de pouvoir le mettre en veille complète.

L'idée de base de l'invention consiste à opérer une extinction progressive et sélective des différents circuits du périphérique, en commençant par ceux qui sont les plus consommateurs d'énergie (typiquement, les circuits radio) et en évitant de désactiver prématurément les circuits gyroscopiques compte tenu de leur latence élevée.

Un autre facteur important dans le bilan énergétique est la fréquence de *polling,* c'est-à-dire la fréquence de scrutation à laquelle le microcontrôleur du périphérique interroge les capteurs gyrométriques et accélérométriques : une fréquence élevée est un gage de très bonne réactivité, mais elle est pénalisante sur le plan de l'autonomie de la batterie.

Selon un aspect subsidiaire, l'invention propose de réduire cette fréquence au bout d'une durée prédéterminée d'immobilité du périphérique, mais sans pour autant désactiver les circuits gyrométriques ni accélérométriques, de manière à préserver pour une certaine durée encore l'aptitude du périphérique à détecter la survenue de nouveaux mouvements.

Plus précisément, l'invention propose un ensemble comprenant les éléments énoncés dans la revendication 1.

Les sous-revendications visent diverses formes de mise en oeuvre particulières, avantageuses.

On va maintenant décrire un exemple de mise en oeuvre du périphérique de l'invention, en référence aux dessins annexés où les mêmes références désignent d'une figure à l'autre des éléments identiques ou fonctionnellement semblables.

La Figure 1 montre de façon simplifiée un périphérique de pointage du type télécommande à capteurs sensoriels, ainsi que l'équipement piloté par cette télécommande.

La Figure 2 est un schéma par blocs des principaux circuits inclus dans la télécommande de la Figure 1.

La Figure 3 montre plus précisément les circuits de filtrage et de traitement des signaux délivrés par les différents capteurs de la télécommande de la Figure 2.

La Figure 4 est un tableau donnant, pour les différents paliers successifs de la mise en veille des circuits, la durée de ces paliers, la consommation globale du périphérique, et l'état d'activité de chacun des circuits concernés ainsi que le temps de latence du périphérique en cas de réactivation.

La Figure 5 est un diagramme d'états montrant l'enchainement des différents paliers décrits au tableau de la Figure 4.

La Figure 6 est un diagramme donnant, en fonction du temps écoulé, l'évolution de la consommation globale du périphérique (échelle de gauche) et celle du temps de latence en cas de réactivation (échelle de droite).

La Figure 7 est un diagramme explicitant sous forme graphique le compromis consommation/latence selon les différents états pris par le périphérique.

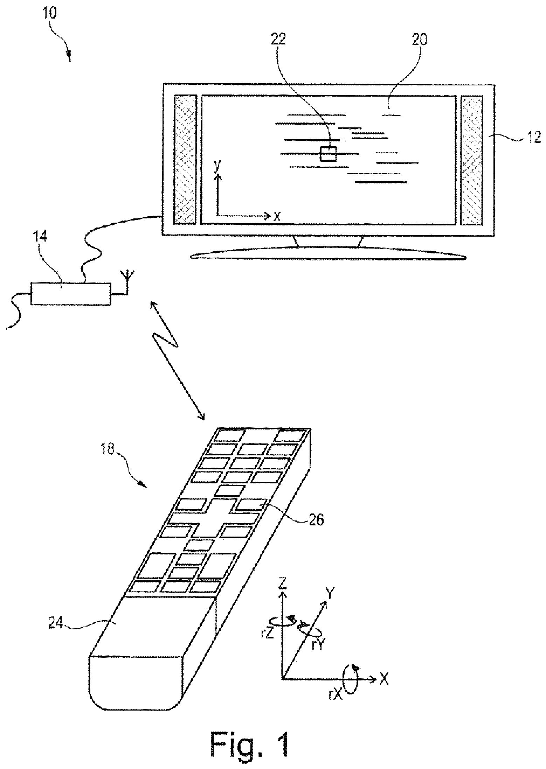

Sur la Figure 1, la référence 10 désigne l'équipement principal, comprenant par exemple un téléviseur 12 relié à un boitier décodeur séparé 14. Un exemple de tel boitier est l'équipement distribué par l'opérateur *Free,* Paris, France sous la dénomination *Freebox Player :* un tel boitier intègre décodeur video, disque dur, magnétoscope numérique, et des logiciels d'affichage graphique sur le téléviseur et de réception et de traitement de commandes envoyées par un utilisateur via une télécommande distante 18.

Le téléviseur 12 comporte un écran 20 sur lequel peuvent être affichées diverses informations, ainsi qu'une zone mobile ou *sprite* 22 dont la position sur l'écran selon les deux directions *x* et *y* peut être commandée par des mouvements imprimés par l'utilisateur à la télécommande 18.

Plus précisément, la télécommande 18 se présente sous forme d'un boitier 24 portant, de manière en elle-même classique, un clavier 26 avec des touches de commande de diverses actions.

La télécommande 18 intègre en outre des capteurs sensoriels permettant de détecter et d'analyser les mouvements du boitier 24 dans l'espace.

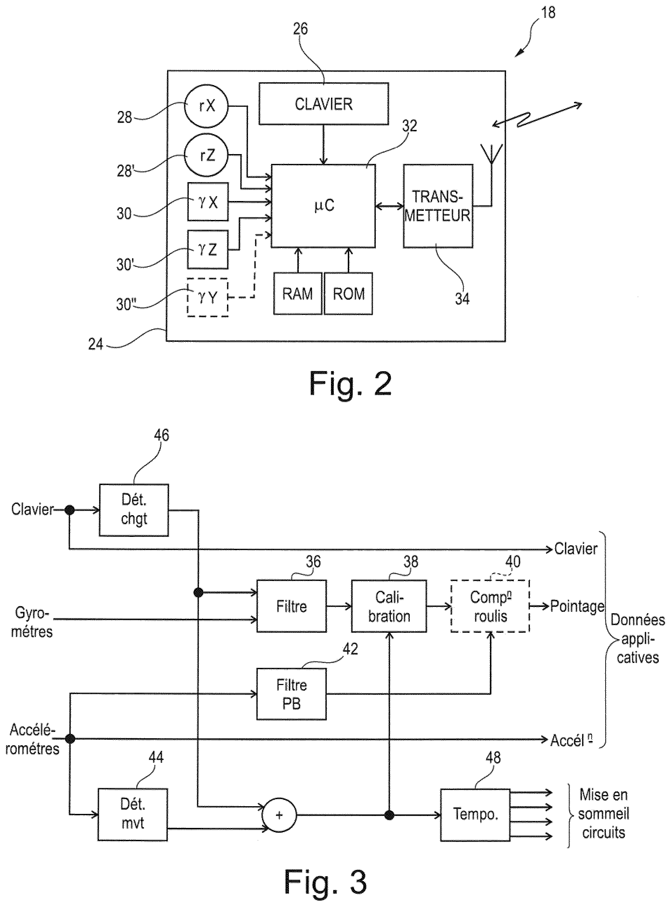

Comme illustré sur le schéma par blocs de la Figure 2, le périphérique de pointage (ou télécommande) 18 comprend deux capteurs gyrométriques 28, 28' détectant des rotations *rX* et *rZ* sur deux axes respectifs *X et Z* du repère cartésien *XYZ* illustré Figure 1. Si l'on ajoute deux capteurs accélérométriques 30, 30' orientés sur ces deux mêmes axes *X* et *Z*, il est possible de déterminer la direction réelle du zénith *Z*, et de projeter les rotations perçues *rX* et *rZ* dans un repère équivalent de celui de l'utilisateur.

Cette projection d'un repère intrinsèque au périphérique de pointage vers le repère de l'utilisateur rend le périphérique insensible aux rotations autour de son propre axe *Y*, qui sont en général des mouvements non significatifs (méthode dite de "compensation de roulis"). Optionnellement, un troisième accéléromètre 30" orienté sur l'axe *Y* permet de discriminer l'attitude du périphérique 18 en cas de rotation autour de son axe *X*. Les signaux produits par ces différents capteurs 28, 28', 30, 30' et 30" sont appliqués à un microcontrôleur 32 également couplé au clavier 26 et à un circuit transmetteur radio 34.

La Figure 3 illustre la manière dont les différentes informations sont filtrées et combinées entre elles.

Les signaux produits par les capteurs gyrométriques font l'objet d'un filtrage pour éviter les effets de sursaut (bloc 36) puis après calibration (bloc 38) et compensation éventuelle du roulis (bloc 40), sont délivrés sous forme de données applicatives représentatives d'un mouvement de déplacement du *sprite* 22 en *x* ou *y* sur l'écran 20 du téléviseur 12, de la même manière qu'avec une souris d'un ordinateur.

Les signaux accélérométriques peuvent également constituer des données applicatives, comme mesure d'une accélération ou pour la détermination de l'orientation absolue du boitier de la télécommande par rapport à un repère terrestre, galiléen. Ces données peuvent également être utilisées pour effectuer (par le bloc 40) la "compensation de roulis" évoqué plus haut, après un simple filtrage passe-bas (bloc 42).

De façon caractéristique de l'invention, le périphérique de pointage comprend des moyens de mise en veille progressive, par paliers, des différents circuits.

Ces moyens, que l'on va maintenant décrire en détail, sont pilotés principalement en fonction des mouvements détectés par les accéléromètres (bloc 44) et des appuis sur les touches du clavier (bloc 46), ces différentes informations étant combinées et commandant un circuit contrôlant la mise en veille temporisée des différents circuits (bloc 48).

Comme on l'a indiqué plus haut, l'invention a pour objet la mise en place d'une politique d'économie d'énergie permettant de préserver la durée de vie de la batterie par une mise en veille progressive et sélective des différents circuits, sans pour autant parasiter le comportement du périphérique du point de vue de l'utilisateur.

Les principales sources de consommation d'énergie sont, par ordre d'importance croissante :

- le transmetteur 34 : de l'ordre de 50 mW,
- le microcontrôleur 32 : de l'ordre de 18 mW en fonctionnement normal, et 120 μW en état de veille,
- les circuits gyrométriques 28, 28' : de l'ordre de 12 mW,
- les circuits accélérométriques 30, 30', 30" : de l'ordre de 600 μW.

Ces différents composants consommateurs d'énergie pourront être activés et désactivés à la demande du microcontrôleur. Toutefois, en cas de demande d'activation ou de réactivation, leur temps de mise en route est variable :

- microcontrôleur : réactivation quasi-instantanée,
- transmetteur : environ 8 ms,
- circuit accélérométrique : environ 10 ms,
- circuit gyrométrique : environ 300 à 500 ms.

On constate que le dernier délai (réactivation du circuit gyrométrique) est particulièrement long. Concrètement, il résulte du temps nécessaire pour charger les condensateurs des capteurs, qui ne peuvent pas délivrer de résultats significatifs tant que cette charge n'est pas stabilisée.

Du fait de ce temps relativement important, perceptible par un utilisateur, il conviendra d'éviter dans la mesure du possible une désactivation prématurée du circuit gyrométrique.

Un dernier facteur à prendre en compte, propre au circuit transmetteur, est le fait que celui-ci doit être maintenu actif pendant environ deux secondes après chaque émission d'un paquet de données, pour lui permettre de recevoir un message confirmatif émis en retour par l'équipement distant - ou de détecter l'absence de réception d'un tel message. Le temps d'aller-retour typique avec émission d'un paquet et réception d'un acquittement est de l'ordre de 0,5 s mais dans certaines conditions il peut être nécessaire de réitérer l'émission des paquets, par exemple en cas de fortes interférences ou de mauvaise réception, d'où le choix d'une durée de maintien en veille d'au moins 2 s, correspondant au pire cas d'une séquence émission/réception.

Pour mettre en oeuvre une politique de conservation énergétique, il est nécessaire de pouvoir déterminer que le périphérique n'est plus en cours d'utilisation, et qu'il est donc possible de le mettre en veille.

Tant que seul le clavier est utilisé et que les capteurs sensoriels sont au repos, la mise en oeuvre de cette politique est très simple : si aucune transition n'est observée sur les touches du clavier, le périphérique est au repos. En revanche, à partir du moment où le périphérique est utilisé avec des capteurs sensoriels actifs, il faut être capable de déterminer une immobilité prolongée du périphérique, et ce, en se basant simplement sur ces capteurs sensoriels.

La problématique est double, et met en jeu deux fonctions : i) d'une part, il s'agit de déterminer de façon purement binaire si le périphérique bouge ou non ; ii) d'autre part, en utilisation comme périphérique de pointage les changements d'orientation doivent être mesurés avec assez de précision et de réactivité pour reproduire fidèlement sur l'écran les déplacements que l'utilisateur applique au périphérique.

Pour la première fonction (déterminer qualitativement si le périphérique est, ou non, déplacé par son utilisateur), la simple observation des accéléromètres est suffisante. En effet :

- d'une part, les seuls mouvements qui ne sont pas perçus par un triplet d'accéléromètres (orientés dans les trois directions orthogonales *XYZ*) sont (i) la rotation *rZ* autour de l'axe vertical et (ii) les translations uniformes en *X, Y* ou *Z*. Or, concrètement, il est pratiquement impossible à un utilisateur de déplacer un objet à main levée sans en changer l'assiette : de ce fait, les seuls accéléromètres permettront de déterminer si le périphérique est en cours d'utilisation ou pas ;

- d'autre part, au repos les accéléromètres mesurent l'accélération de la gravité, qui est absolue et constante : ainsi, même si les signaux sont bruités, les accéléromètres donneront toujours, pour une même orientation du périphérique, des valeurs moyennes similaires.

En revanche, pour la seconde fonction (pour déterminer le déplacement voulu par l'utilisateur lorsque la télécommande est utilisée comme périphérique de pointage) il est nécessaire de mesurer les rotations *rX* et *rZ* autour des axes *X* et *Z* (Figure 1) et donc d'activer les gyroscopes au moins dans deux dimensions. Des deux rotations mesurées on déduira directement les coordonnées relatives du déplacement *dx* et *dy* du *sprite* à l'écran, vecteur qui est utilisable comme translation :

$$(dx, dy) = (-rZ, -rX)$$

si l'on souhaite effectuer une compensation de roulis, c'est-à-dire rendre le périphérique insensible à des rotations *rY* autour de son propre axe *Y*, il est nécessaire de projeter vers le repère de l'écran (repère galiléen) les rotations mesurées dans le repère intrinsèque au périphérique.

Les accéléromètres permettent de mesurer aisément la direction du champ de gravité, qui fournit une référence selon les axes *X* et *Z*, suffisante pour la projection désirée. Pour cette projection, le vecteur accélération (*X, Z*) sert de vecteur unité dans le repère d'origine, la projection d'un repère vers l'autre étant donnée par :

$$(dx, dy) = (-rZ, -rX) \cdot \overline{(X, Z)} = \left( \frac{Z \cdot rZ + X \cdot rX}{X^2 + Z^2}, \frac{Z \cdot rX - X \cdot rZ}{X^2 + Z^2} \right)$$

La combinaison des deux fonctions ci-dessus (détection de l'utilisation ou non du périphérique, et pilotage de l'équipement distant par pointage) impose un compromis entre économie d'énergie et temps de réaction.

En effet, la mise en veille d'un maximum de capteurs du périphérique assure une plus grande économie d'énergie. Cependant, certains des capteurs requièrent un temps de mise en route non négligeable de sorte que, du point de vue de l'utilisateur, le réveil des capteurs peut être perceptible et provoquer une sensation désagréable de non-réactivité.

D'une manière générale, il est nécessaire de garder en activité au moins certains des capteurs sensoriels pour être capable de déterminer si leur utilisation est encore nécessaire : une fois tous désactivés, les capteurs ne pourront plus déterminer les mouvements du périphérique, ne permettant donc pas de déterminer l'activité de l'utilisateur et ne pouvant donc plus en fin de compte réveiller le périphérique.

Pour arriver à un compromis acceptable, l'invention prévoit une mise en veille du périphérique par paliers.

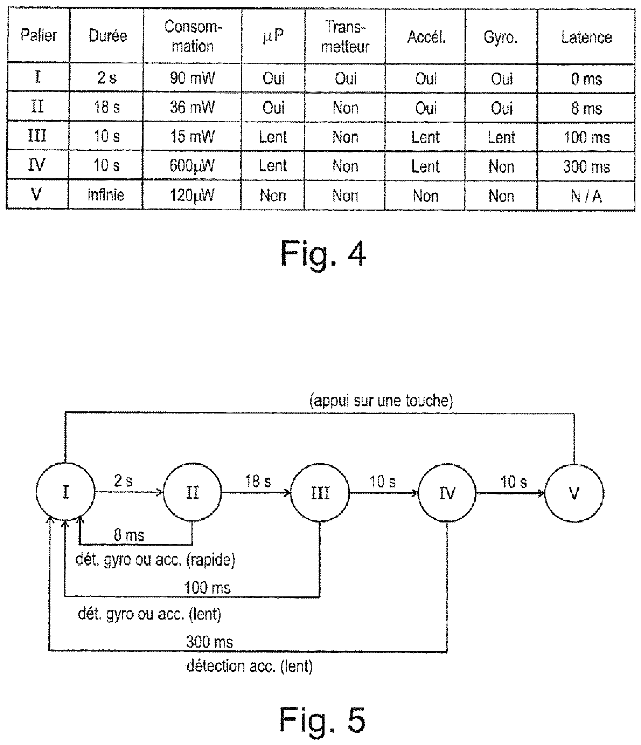

Dans l'exemple que l'on va décrire, l'état du périphérique comporte cinq paliers I à V, dont les paramètres sont décrits au tableau de la Figure 4 et dont l'enchainement est schématisé par le diagramme d'états de la Figure 5.

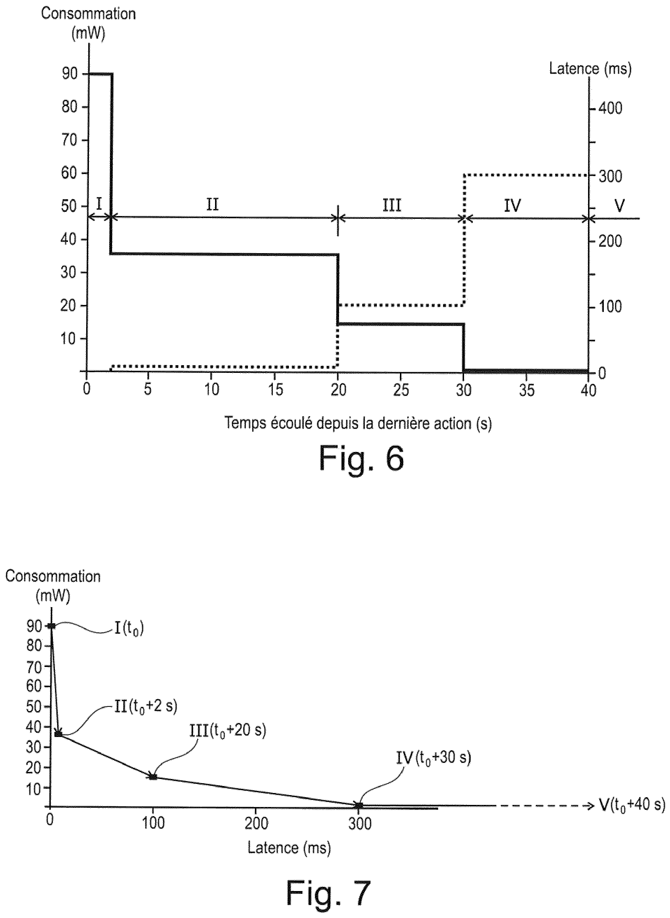

Pour ce même exemple, les Figures 6 et 7 illustrent sous forme graphique, respectivement, l'évolution de la consommation globale du périphérique (échelle de gauche) et du temps de latence en cas de réactivation (échelle de droite) en fonction du temps écoulé, et le compromis consommation/latence selon les différents états pris par le périphérique. Essentiellement, tant que le dernier palier n'aura pas été atteint, un mouvement du périphérique devra pouvoir être vu, qui provoquera un réveil complet du périphérique à son premier palier de consommation, dans un état pleinement fonctionnel.

Plus le périphérique fait l'objet d'une mise en veille profonde, plus le temps de réaction effectif sera long. On évitera des délais trop courts avant chaque nouveau palier, car un délai trop court aurait pour effet de parasiter le comportement du périphérique du point de vue de l'utilisateur : même s'il offre une meilleure conservation énergétique, un palier atteint dans un délai trop court ne serait pas alors un avantage majeur pour la qualité de service ressentie.

En effet, un périphérique de pointage tel que celui décrit ici sert à interagir avec une interface (au sein de l'équipement distant) qui peut elle-même avoir des temps de réaction variables. Lorsque par exemple l'interface est en train de charger des données (chargement d'une page Internet par un navigateur), l'utilisateur n'a pas besoin d'interagir avec l'équipement et il gardera donc naturellement le périphérique de pointage dans une position stable. Dans ces conditions, un changement de palier prématuré risquerait de provoquer une mise en veille plus profonde du périphérique, alors même que l'utilisateur était sur le point de le bouger à nouveau. Il est de ce fait important de garder un délai suffisant avant mise en veille pour qu'en utilisation normale l'utilisateur ne perçoive aucune latence résultant du temps de mise en route de l'un ou l'autre des circuits du périphérique. Dans l'exemple donné aux Figures 4 à 7, l'état initial I du périphérique correspond à une situation où celui-ci est pleinement fonctionnel, avec tous ses circuits activés.

Cet état I est maintenu pendant au moins 2 s, puis le transmetteur radio, qui est le circuit le plus consommateur, est désactivé (état II) s'il n'y a plus de paquet de trames de données à émettre.

Dans cet état II, la latence est de 8 ms (temps de réveil du transmetteur), durée trop faible pour être perceptible par un utilisateur.

Si aucun mouvement n'est détecté par les capteurs sensoriels pendant une durée supplémentaire de, par exemple, 18 s, alors la fréquence de scrutation de ces capteurs est réduite (état III) : cette fréquence de scrutation, initialement de 15 ms (66,6 Hz) est abaissée à une valeur beaucoup plus faible, de l'ordre de 1 à 2 Hz, procurant une réduction significative (plus de 50 %) de la consommation du périphérique.

Toute détection d'un mouvement par les capteurs sensoriels provoquera le retour de l'état II à l'état I (avec une latence de 8 ms), ou de l'état III à l'état I (avec une latence de 100 ms).

Si aucun mouvement n'a été détecté par les capteurs sensoriels pendant une durée supplémentaire de, par exemple, 10 s, alors le circuit gyrométrique est désactivé (état IV), procurant une réduction très élevée de la consommation : de 15 mW à 600 $\mu$W dans cet exemple.

Mais comme le circuit accélérométrique reste encore actif, il reste toujours possible de détecter des mouvements, avec toutefois une latence de 300 ms (valeur correspondant sensiblement au minimum perceptible par un utilisateur) pour ramener le périphérique à son état pleinement fonctionnel (l'état I).

Enfin, si aucun déplacement n'a été détecté par les capteurs sensoriels au bout d'une durée additionnelle de 10 s, c'est-à-dire au bout d'une durée totale de 40 s après le début du processus de mise en veille progressive, alors le circuit accélérométrique est désactivé, réduisant ainsi la consommation à celle du microcontrôleur dans un état de veille, 120 $\mu$W dans cet exemple (état V).

Le retour de l'état V à l'état I ne peut plus être réalisé par détection d'un mouvement par les capteurs sensoriels, puisqu'aucun d'entre eux n'est alimenté. Le retour à cet état opérationnel résultera alors de l'appui physique par l'utilisateur sur une touche du clavier.

## Revendications

1. Un périphérique autonome de pointage (18), comportant dans un boitier (24) apte à être tenu à la main :

   - un circuit gyrométrique (28, 28'), apte à produire des signaux en réponse à une rotation (*rX, rZ*) imprimée au boitier selon au moins deux axes (*X, Z*) ;
   - un circuit accélérométrique (30, 30', 30"), apte à produire des signaux en réponse à une accélération imprimée au boitier selon au moins deux axes (*X, Z*) sur trois (*X, Y, Z*) ;
   - un transmetteur (34), apte à émettre des trames de données à destination d'un équipement pilotable à distance par le périphérique de pointage en fonction des mouvements imprimés au boitier ;

- un microcontrôleur (32), apte à opérer une scrutation périodique des circuits gyrométrique et accélérométrique et à produire en réponse des signaux de données appliqués au transmetteur pour émission de trames de données ;
- une batterie d'alimentation des circuits gyrométrique et accélérométrique, du transmetteur et du microcontrôleur ; et
- des moyens (48) de gestion de l'énergie de la batterie avec désactivation du transmetteur et des circuits gyrométrique et accélérométrique, et mise en veille du microcontrôleur, dans lequel les moyens de gestion sont des moyens opérant par paliers successifs (I-V), ces moyens de gestion étant aptes à :

   - désactiver (I) le transmetteur (34) au bout d'une première temporisation après émission d'une trame de données, en gardant actifs le circuit gyrométrique, le circuit accélérométrique et le microcontrôleur ;
   - désactiver (II) le circuit gyrométrique au bout d'une deuxième temporisation en l'absence de mouvement détecté par les circuits gyrométrique et/ou accélérométrique après désactivation du transmetteur, en gardant actifs le circuit accélérométrique et le microcontrôleur ;
   - désactiver (IV) le circuit accélérométrique (30, 30', 30") au bout d'une troisième temporisation en l'absence de mouvement détecté par le circuit accélérométrique après désactivation du circuit gyrométrique ; et
   - mettre en veille (V) le microcontrôleur au bout d'une quatrième temporisation en l'absence de mouvement détecté par le circuit accélérométrique après désactivation du circuit gyrométrique.

2. Le périphérique de la revendication 1, dans lequel les moyens de gestion sont également aptes à :

   - ralentir (III) la scrutation périodique des circuits gyrométrique et/ou accélérométrique par le microcontrôleur au bout d'une cinquième temporisation après désactivation du transmetteur et avant désactivation du circuit gyrométrique en l'absence de mouvement détecté par les circuits gyrométrique et/ou accélérométrique, en gardant actif le microcontrôleur.

3. Le périphérique de la revendication 1, dans lequel les moyens de gestion sont également aptes à :

   - après désactivation du transmetteur, réactiver le transmetteur sur détection d'un mouvement par le circuit gyrométrique et/ou par le circuit accélérométrique.

4. Le périphérique de la revendication 1, dans lequel les moyens de gestion sont également aptes à :

   - après désactivation du circuit gyrométrique, réactiver le circuit gyrométrique sur détection d'un mouvement par le circuit accélérométrique.

5. Le périphérique de la revendication 1, dans lequel, le périphérique comprenant des touches d'un clavier (26), les moyens de gestion sont également aptes à :

   - après mise en veille du microcontrôleur, réactiver le microcontrôleur sur détection de l'appui sur une touche du périphérique.


**Patentansprüche**

1. Autonomes Zeigegerät (18), das in einem Gehäuse (24), das in der Hand gehalten werden kann, Folgendes aufweist:

   - eine Drehbewegungsmess-Schaltung (28, 28'), die dazu eingerichtet ist, Signale in Reaktion auf eine Drehung *(rX, rZ)* zu erzeugen, die dem Gehäuse in mindestens zwei Achsen (*X, Z*) verliehen wird;
   - eine Beschleunigungsmess-Schaltung (30, 30', 30"), die dazu eingerichtet ist, Signale in Reaktion auf eine Beschleunigung zu erzeugen, die dem Gehäuse in mindestens zwei Achsen (*X, Z*) von drei Achsen (*X, Y, Z*) verliehen wird;
   - einen Sender (34), der dazu eingerichtet ist, Daten-Frames in Abhängigkeit von den dem Gehäuse verliehenen Bewegungen an eine Einrichtung zu senden, die aus der Ferne durch das Zeigegerät ansteuerbar ist,
   - einen Mikrocontroller (32), der dazu eingerichtet ist, eine periodische Abfrage der Drehbewegungsmess-Schaltung und Beschleunigungsmess-Schaltung durchzuführen und als Reaktion Datensignale zu erzeugen, die dem Sender für das Senden von Daten-Frames zugeführt werden;
   - eine Batterie zur Versorgung der Drehbewegungsmess-Schaltung und Beschleunigungsmess-Schaltung, des Senders und des Mikrocontrollers; und

- Mittel (48) zur Verwaltung der Energie der Batterie mit Deaktivierung des Senders und der Drehbewegungsmess-Schaltung und Beschleunigungsmess-Schaltung und nach Versetzen des Mikrocontrollers in Ruhezustand, wobei die Verwaltungsmittel Mittel sind, die stufenweise (I-V) arbeiten, wobei diese Verwaltungsmittel eingerichtet sind:

- um Deaktivieren (I) des Senders (34) am Ende einer ersten Verzögerung nach Senden eines Daten-Frames, wobei die Drehbewegungsmess-Schaltung, die Beschleunigungsmess-Schaltung und der Mikrocontroller aktiv gehalten werden;
- zum Deaktivieren (II) der Drehbewegungsmess-Schaltung am Ende einer zweiten Verzögerung in Abwesenheit einer durch die Drehbewegungsmess-Schaltung und/oder Beschleunigungsmess-Schaltung erkannten Bewegung nach Deaktivierung des Senders, wobei die Beschleunigungsmess-Schaltung und der Mikrocontrollers aktiv gehalten werden;
- zum Deaktivieren (IV) der Beschleunigungsmess-Schaltung (30, 30', 30") am Ende einer dritten Verzögerung in Abwesenheit einer durch die Beschleunigungsmess-Schaltung erkannten Bewegung nach Deaktivierung der Drehbewegungsmess-Schaltung; und
- zum Versetzen des Mikrocontrollers in Ruhestand (V) am Ende einer vierten Verzögerung in Abwesenheit einer durch die Beschleunigungsmess-Schaltung erkannten Bewegung nach Deaktivierung der Drehbewegungsmess-Schaltung.

2. Gerät nach Anspruch 1, wobei die Verwaltungsmittel ferner eingerichtet sind:

- zum Verlangsamen (III) der periodischen Abfrage der Drehbewegungsmess-Schaltung und/oder Beschleunigungsmess-Schaltung durch den Mikrocontroller am Ende einer fünften Verzögerung nach Deaktivierung des Senders und vor Deaktivierung der Drehbewegungsmess-Schaltung in Abwesenheit einer durch die Drehbewegungsmess-Schaltung und/oder Beschleunigungsmess-Schaltung erkannten Bewegung, wobei der Mikrocontroller aktiv gehalten wird.

3. Gerät nach Anspruch 1, wobei die Verwaltungsmittel ferner eingerichtet sind:

- nach Deaktivierung des Senders, zum Reaktivieren des Senders bei Erkennung einer Bewegung durch die Drehbewegungsmess-Schaltung und/oder durch die Beschleunigungsmess-Schaltung.

4. Gerät nach Anspruch 1, wobei die Verwaltungsmittel ferner eingerichtet sind:

- nach Deaktivierung der Drehbewegungsmess-Schaltung, zum Reaktivieren der Drehbewegungsmess-Schaltung bei Erkennung einer Bewegung durch die Beschleunigungsmess-Schaltung.

5. Gerät nach Anspruch 1, wobei, da das Gerät Tasten einer Tastatur (26) umfasst, die Verwaltungsmittel ferner eingerichtet sind:

- nach Versetzen des Mikrocontrollers in Ruhestand, zum Reaktivieren des Mikrocontrollers bei Erkennung des Drückens einer Taste des Geräts.

**Claims**

1. An autonomous pointing peripheral unit (18) including, in a casing (24) adapted to be held in hand:

- a gyrometer circuit (28, 28'), adapted to produce signals in response to a rotation ($rX, rZ$) imparted to the casing according to at least two axes ($X, Z$);
- an accelerometer circuit (30, 30', 30"), adapted to produce signals in response to an acceleration imparted to the casing according to about two axes ($X, Z$) out of three ($X, Y, Z$);
- a transmitter (34), adapted to emit data frames towards a device able to be remote controlled by the pointing peripheral unit as a function of the movements imparted to the casing;
- a microcontroller (32), adapted to operate a periodical polling of the gyrometer and accelerometer circuits and to produce in response data signals applied to the transmitter for emission of data frames;
- a battery for the power supply of the gyrometer and accelerometer circuits, the transmitter and the microcon-

**EP 2 793 100 B1**

troller; and
- battery energy management means (48) with deactivation of the transmitter and of the gyrometer and accelerometer circuits, and putting of the microcontroller in standby state,

wherein the management means are means operating by successive steps (I-V), said management means being adapted to:

- deactivate (I) the transmitter (34) at the end of a first time out after emission of a data frame, with the gyrometer circuit, the accelerometer circuit and the microcontroller kept active;
- deactivate (II) the gyrometer circuit at the end of a second time out in the absence of movement detected by the gyrometer and/or accelerometer circuits after deactivation of the transmitter, with the accelerometer circuit and the microcontroller being active;
- deactivate (IV) the accelerometer circuit (30, 30', 30") at the end of a third time out in the absence of movement detected by the accelerometer circuit after deactivation of the gyrometer circuit; and
- put (V) the microcontroller in standby state at the end of a fourth time out in the absence of movement detected by the accelerometer circuit after deactivation of the gyrometer circuit.

2. The peripheral unit of claim 1, wherein the management means are also adapted to :

- slow down (III) the periodic polling of the gyrometer and/or accelerometer circuits by the microcontroller at the end of a fifth time out after deactivation of the transmitter and before deactivation of the gyrometer circuit in the absence of movement detected by the gyrometer and/or accelerometer circuits, with the microcontroller kept active.

3. The peripheral unit of claim 1, wherein the management means are also adapted to :

- after deactivation of the transmitter, reactivate the transmitter upon detection of a movement by the gyrometer circuit and/or by the accelerometer circuit.

4. The peripheral unit of claim 1, wherein the management means are also adapted to :

- after deactivation of the gyrometer circuit, reactivate the gyrometer circuit upon detection of a movement by the accelerometer circuit.

5. The peripheral unit of claim 1, wherein, the peripheral unit comprising keys of a keyboard (26), the management means are also adapted to :

- after putting of the microcontroller in standby state, reactivate the microcontroller upon detection that a key of the peripheral unit has been pressed.

9

## Fig. 1

Fig. 2

Fig. 3

| Palier | Durée | Consom-mation | μP | Trans-metteur | Accél. | Gyro. | Latence |
|--------|-------|---------------|-----|---------------|--------|-------|---------|
| I | 2 s | 90 mW | Oui | Oui | Oui | Oui | 0 ms |
| II | 18 s | 36 mW | Oui | Non | Oui | Oui | 8 ms |
| III | 10 s | 15 mW | Lent | Non | Lent | Lent | 100 ms |
| IV | 10 s | 600μW | Lent | Non | Lent | Non | 300 ms |
| V | infinie | 120μW | Non | Non | Non | Non | N / A |

## Fig. 4

(appui sur une touche)

I — 2 s → II — 18 s → III — 10 s → IV — 10 s → V

8 ms
dét. gyro ou acc. (rapide)

100 ms
dét. gyro ou acc. (lent)

300 ms
détection acc. (lent)

## Fig. 5

Fig. 6

Fig. 7

**EP 2 793 100 B1**

## RÉFÉRENCES CITÉES DANS LA DESCRIPTION

**Documents brevets cités dans la description**

- US 20100218024 A1